# EUROPEAN PATENT SPECIFICATION

(11) **EP 3 664 408 B1**
(45) Date of publication and mention of the grant of the patent: **11.08.2021**
(21) Application number: 19211354.6
(22) Date of filing: 25.11.2019
(51) Int. Cl.: H04W 12/08, H04L 29/06, H04L 12/28, H04W 12/00, H04W 84/12, H04W 12/30, H04W 12/63

(54) **COMMUNICATION SYSTEM AND METHOD FOR AUTHORIZING AN APPLIANCE**
KOMMUNIKATIONSSYSTEM UND VERFAHREN ZUR AUTORISIERUNG EINES GERÄTS
SYSTÈME DE COMMUNICATION ET PROCÉDÉ D'AUTORISATION D'UN APPAREIL

(30) Priority: 06.12.2018 US 201816211682
(43) Date of publication of application: 10.06.2020
(73) Proprietor: Whirlpool Corporation, Benton Harbor, MI 49022 (US)
(72) Inventor: Gary, Jr., Wyndham F., 21024 Cassinetta di Biandronno (VA) (IT); Jakeway, Michael J., 21024 Cassinetta di Biandronno (VA) (IT); Johnson, Jeffrey, 21024 Cassinetta di Biandronno (VA) (IT)
(74) Representative: Spina, Alessandro

(56) References cited:
- EP-A1- 2 814 273
- US-A1- 2015 097 689
- US-A1- 2015 156 631

## Description

### TECHNICAL FIELD

This disclosure generally relates to a communication system and method for authorizing an appliance, and more particularly, to a communication system and method for authorizing an appliance via another authorized appliance.

### BACKGROUND

Appliances can be configured to establish communication, for example, over a wireless network. When establishing such a connection to a secure wireless network, configuration techniques must be employed to provide the wireless authorization key or code to the appliance. In some instances, a user will communicate directly with the appliance, provide the wireless authorization key directly to the appliance, and allow the appliance to connect to the wireless network.

US 2015/097689 A1 (hereafter referred to as document D1) discloses a "Streamlined Setup for a Second Smart Hazard Detector" method, in which instructions are transmitted to cause the first hazard detector to establish wireless communication between the first hazard detector and a second hazard detector.

US2015/156631 A1 and EP 2814273 A1 disclose methods of provisioning an appliance to connect to a local Wi-Fi network.

### SUMMARY

The invention is defined by the independent claims that accompany this disclosure. Advantageous embodiments thereof are defined in the respective dependent claims.

The present disclosure relates to a method for authorizing a first appliance adapted to perform a cycle of operation on an article to communicate with a local area network (LAN), the method including receiving, at a controller module remote from the first appliance, identifying data of the first appliance and user data, verifying, by the controller module, the user data is associated with a second appliance authorized to communicate with the LAN by way of authorization data, generating a set of instructions, by the controller module, adapted to instruct the second appliance to communicate directly with the first appliance and to transmit the authorization data from the second appliance to the first appliance. The set of instructions include the identifying data of the first appliance, and whereby the first appliance communicates with the LAN by way of the authorization data, and receiving, at the controller module, a set of communications from the first appliance, wherein the set of communications arrives by way of authorized communications of the LAN.

Another aspect of the present disclosure relates to a communication system that includes a first appliance configured to perform a cycle of operation on an article and having a communications module, a second appliance in authorized communication with a local area network (LAN) within range of the first appliance and the second appliance, and a controller module located remotely from the LAN. The controller module located remotely from the LAN is in communication with the LAN by way of the Internet. The controller module is configured to receive identifying data of the first appliance, verify the second appliance is authorized to communicate with the LAN by way of authorization data, and instruct the second appliance, by way of the Internet, to communicate directly with the first appliance and to transmit the authorization data from the second appliance to the first appliance.

### BRIEF DESCRIPTION OF THE DRAWINGS

In the drawings:
FIG. 1 is a schematic view of a communication system according to aspects of the present disclosure.
FIG. 2 is a schematic view of communication between aspects of the communication system of FIG. 1, according to aspects of the present disclosure.
FIG. 3 is a flow chart illustrating a method for authorizing a first appliance of the communication system of FIG. 1, according to aspects of the present disclosure.

### DETAILED DESCRIPTION

Aspects of the disclosure illustrate the connection of a first appliance to a first network. The connection process can include recognition of the first appliance by an external server or computer system. Upon recognition, the external server or commuter system can communicate via a second network with a second appliance connected to the first network. The second appliance, upon prompting of the external server or computer system, then communications information that enables the first appliance to connect with the first network.

While "a set of' various elements will be described, it will be understood that "a set" can include any number of the respective elements, including only one element. As used herein, a "system" or a "controller module" can include at least one processor and memory. Non-limiting examples of the memory can include Random Access Memory (RAM), Read-Only Memory (ROM), flash memory, or one or more different types of portable electronic memory, such as discs, DVDs, CD-ROMs, etc., or any suitable combination of these types of memory. The processor can be configured to run any suitable programs or executable instructions designed to carry out various methods, functionality, processing tasks, calculations, or the like, to enable or achieve the technical operations or operations described herein. The program can include a computer program product that can include machine-readable media for carrying or having machine-executable instructions or data structures stored thereon. Such machine-readable media can be any available media, which can be accessed by a general purpose or special purpose computer or other machine with a processor. Generally, such a computer program can include routines, programs, objects, components, data structures, algorithms, etc., that have the technical effect of performing particular tasks or implement particular abstract data types.

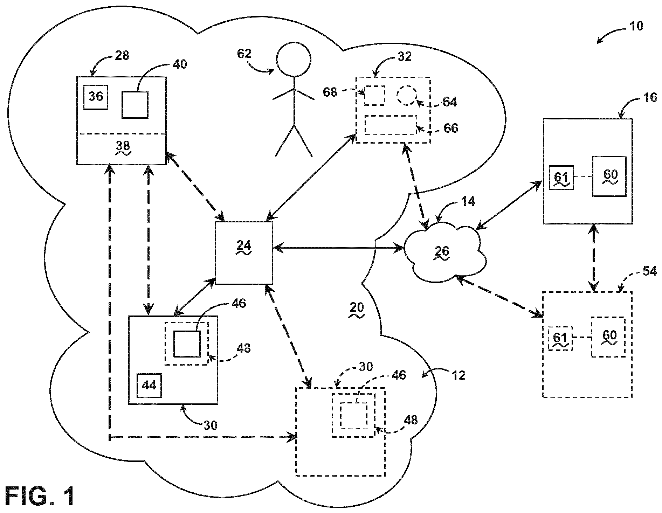

FIG. 1 illustrates a communication system 10. As illustrated, by way of non-limiting example, the communication system 10 can include a first network 12, a second network 14, and a remote system 16. It is contemplated that the first network 12 can be a home network or a local area network (LAN) 20 generally or spatially limited in size or range to a local space, such as the home of a user. The LAN 20 can be, for example, a wireless local area network (WLAN) generated by a wireless gateway 24. The wireless gateway 24, by way of non-limiting example, can be a router or a smart hub. The wireless gateway 24 can function as a central connection between the first network 12 and the second network 14. The second network 14 can include, for example, the Internet 26. As used herein, the "remote" system 16 can include any system, server, database, computer system, or the like, located remote from the first network 12 (e.g. not within the first network 12).

A first appliance 28 and a second appliance 30 can be disposed or positioned within signal range of the first network 12. The signal range in which communication can be established can be limited, by way of non-limiting example, by physical distance or an object that obstructs communication.

The first appliance 28 is adapted to perform a cycle of operation on an article. By way of non-limiting example, the first appliance 28 can be a laundry treating appliance, a refrigerator, a dishwasher, a food waste dehydrator, a microwave, an oven, a garage door opener, or a programmable thermostat. Optionally, the first appliance 28 can include a first treating chamber 36 for performing the cycle of operation on an article.

The first appliance 28 can include a communication module 38. The communication module 38 can be configured or adapted to communicate with the first network 12, for example, using Bluetooth, Wi-Fi, Universal Serial Bus (USB), Ethernet, or another known wired or wireless communication methods, transmission standards, interfaces, or the like. The communication module 38 can enable for the communication of transmissions between the first appliance 28 to another device, such as the second appliance 30 or the wireless gateway 24. It is contemplated that communication transmissions between the first appliance 28 and the other device can only occur when the other device is within signal range of the first appliance 28. It is further contemplated that communication between the first appliance 28 and the second appliance 30 cannot be established when the second appliance 30 is out of signal range of the first appliance 28.

The communication module 38 of the first appliance 28 can operate in at least two modes: a disconnected mode, wherein the communication module 38 is not communicating or not in a communicative relationship with another device, and in a connected mode, wherein the communication module 38 is communicating or in a communicative relationship with another device.

The first appliance 28 can include identifying data 40 coupled to or included at the first appliance 28. In one non-limiting example, identifying data 40 can include any information that can identify a unique set of information associated with the first appliance 28. The identifying data 40 can include, but is not limited to, an appliance serial number, model number, another unique code, a unique set of information associated with the communication module 38, or a combination thereof. In another non-limiting example, the unique set of information associated with the communication module 38 can include a wireless signal service set identifier (SSID), a media access control (MAC) address for the communication module 38, an authorization code or passphase, a network name, or a combination thereof. By way of non-limiting example, the identifying data 40 can be included or encoded as at least a portion of an optical code, a barcode, a quick response (QR) code, visual or textual-based typeface, another image, or a combination thereof. The identifying data 40 can be, by way of non-limiting example, any data that results in knowing or being able to build at least one of wireless signal service set identifier (SSID) of the first appliance 28 or a media access control (MAC) address of the first appliance 28. Optionally, the identifying data 40 can be digitally stored within the first appliance 28. For example, the identifying data 40 can be stored within the first appliance 28 using a radio-frequency identification (RFID) tag, a near field communication (NFC) tag, a passive battery-free Bluetooth tag, or an active (or powered) Bluetooth tag or beaconing device.

The second appliance 30 can also be adapted to perform a cycle of operation on an article. By way of non-limiting example, the second appliance 30 can be a laundry treating appliance, a refrigerator, a dishwasher, a food waste dehydrator, a microwave, an oven, a garage door opener, or a programmable thermostat. Optionally, the second appliance 30 can include a second treating chamber 44. The second appliance 30 includes authorization data 46 to allow for or enabling authorized communication between the second appliance 30 and the LAN 20. In this sense, aspects of the disclosure assume the second appliance 30 is, or has been, previously authorized to communicate with the LAN 20. As used herein, "authorized" to communicate with the LAN 20 means the second appliance 30 has been provided or otherwise acquired a code, key, passphrase, or the like, to enable communication within the LAN 20. In one non-limiting example, the enabled communication can include encrypted communication, such as wireless communications encrypted by way of wired equivalent privacy (WEP), Wi-Fi protected access (WPA), or another encryption scheme. The authorization data 46 can include at least a wireless network name of the LAN 20. The authorization data 46 can further include, by way of non-limiting example, the password or passphrase associated with enabling access or communications with the LAN 20. Optionally, the authorization data 46 can be stored in a memory 48.

Optionally, additional second appliances 30, shown in phantom outline can be included in aspects of the disclosure. In this sense, the second appliances 30 can include a set of second appliances 30 within signal range of the first appliance 28 and the first network 12. The set of second appliances 30 can include any number of second appliances 30. Each respective second appliance 30 can include the authorization data 46 stored in the memory 48.

In non-limiting aspects of the disclosure, the communication system 10 can further include a mobile device 32, such as a cellular telephone, a touch screen device, a tablet, a laptop computer system, or the like. In this example, the mobile device 32 can further be controlled by a user 62, and can connect to at least one of the first network 12 or the second network 14. The mobile device 32 can include an input device 64 for receiving an input. In one non-limiting example, the input device 64 can include a camera capable of taking a picture, image, or the like, for example, of the identifying data 40 of the first appliance 28. In this sense, the camera can include software adapted or configured to capture, scan, or otherwise digitize a barcode, a (QR) code, a visual or textual-based typeface, another image, or a combination thereof, as defined by the identifying data 40. In another non-limiting example, the input device 64 can be capable of obtaining the identifying data 40 from the detection or communication of radio waves or magnetic fields.

In yet another non-limiting example, the input device 64 can include a user interface 66 that allows the user 62 to input information, such as the identifying data 40 of the first appliance 28, as read or received by the user 62. In another non-limiting example, the mobile device 32 can include user data 68 associated to the user 62, the second appliance 30, the first network 12, or a combination thereof. In one non-limiting aspect, the user data 68 can include unique identifier for the user 62, such as an email address the user 62 provides, an account name, an account number, an account password, or a key.

It is contemplated that the input device 64 can be any device, application, or program capable of obtaining the identifying information 40.

The remote system 16 can communicate with the first network 12 via the second network 14. As used herein, the term "remote" further indicates an indirect communication between that requires the connection of at least two networks. The remote system 16 can communicate with the first network 12, for example, via the internet 26 of the second network 14.

The remote system 16 can be an external computer system, server, or any known computer system or combination or computer systems. Optionally, the remote system 16 can communicate with additional computer systems or servers 54, either directly or by way of the second network 14. While illustrated as a single computer or server, the additional computer systems or servers 54 can include any number of additional computer systems or servers 54.

The remote system 16 (as well as the additional computer systems or servers 54, when present) can include a controller module 60. The remote system 16 can further include a database 61 stored in memory, including an associated list of user data and a set of appliances associated with the user data, the set of appliances in communication with the remote system 16, such as by way of the second network 14. Stated another way, the database 61 can include a list or a set of second appliances 30 that are in communication with the second network 14 by way of the first network 12.The control module 60 can include or be in communication with any suitable processor, suitable programs, neural network, or executable instructions designed to carry out various methods, functionality, processing tasks, calculations, or the like, to enable or achieve the technical operations or operations described herein. The program can include a computer program product that can include machine-readable media for carrying or having machine-executable instructions or data structures stored thereon, including but not limited to, querying the database 61. Such machine-readable media can be any available media, which can be accessed by a general purpose or special purpose computer or other machine with a processor. Generally, such a computer program can include routines, programs, objects, components, data structures, algorithms, etc., that have the technical effect of performing particular tasks or implement particular abstract data types.

Thus, non-limiting aspects of the disclosure include the communication system 10 that can include the first appliance 28, where it will be understood that the first appliance 28 is not presently in communication with the first network 12. For example, during initial set up of a new appliance, the first appliance 28 is connectable to the first network 12, but is not presently aware of the how precisely to connect to the first network 12 (e.g. it is not authorized, or does not "know" the encryption keys of the first network 12). Conversely, it will be understood that the second appliance 30 (or set of second appliances 30) is presently in communication with the first network 12, for example, where the second appliance 30 has been previously authorized to communication with the first network 12 by way of the authorization data 46. Thus, non-limiting aspects of the disclosure can be included wherein the first appliance 28 can be authorized to communicate with the first network 12 by way of the second appliance.

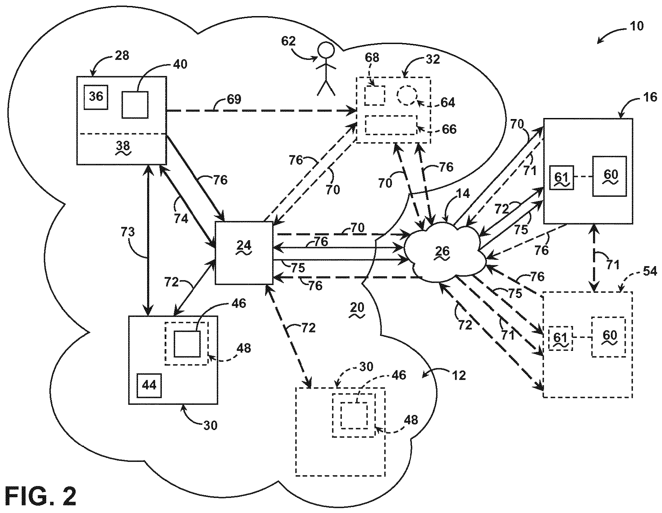

FIG. 2 is a schematic view of communication between aspects of the communication system 10 of FIG. 1. In operation, by way of non-limiting example, the identifying data 40 can be communicated from the first appliance 28 the mobile device 32, such as during initial set up of the first appliance 28. By way of an application or software of the mobile device 32, the user 62 can facilitate the transferring of the identifying data 40 from the first appliance 28. The facilitated transfer is schematically represented by an initial identity communication 69. In one non-limiting example, the identifying data 40 can be received by the mobile device 32 via the camera 64 or the user input via the user interface 66. Additionally or alternatively, a sensor or a scanner can be used to obtain the identifying data 40 of the first appliance 28. It is further contemplated that the identifying data 40 is communicated to the mobile device 32 via the communication module 38.

The user data 68 stored in the mobile device 32 and the identifying data 40 received at the mobile device 32 can be further communicated to the controller module 60 of the remote system 16. As illustrated, by way of non-limiting example, the user data 68 and the identifying data 40 can be communicated via a first communication 70 from the mobile device 32 to the controller module 60 of the remote system 16 by way of the first network 12, the second network 14, or a combination thereof. Optionally, the user data 68 and the identifying data 40 are further communicated with the control modules 60 of the additional computer systems or servers 54 directly or via the second network 14, as illustrated, by way of non-limiting example, as additional first communication 71.

The controller module 60, in response to receiving the user data 68 and the identifying data 40, uses the user data 68 to verify the user 62 and access related information. The related information can include identifying one or more second appliances 30 associated with the user 62 (or e.g. associated with the user data 68) that have previously communicated with the remote system 16, indicating those one or more second appliances 30 are presently aware of credential-type information for authorized communication with the first network 12. The related information can accessed from, for example, the database 61.

The controller module 60 can generate a set of instructions adapted to instruct the second appliance 30 to communicate directly with the first appliance 28. By way of non-limiting example, the set of instructions can be communicated from at least the controller module 60 to the second appliance 30 via a second communication 72. The set of instructions can include the identifying data 40, or information derivate thereof. For example, it can be predetermined that the first appliance 28, when operating in disconnected mode, broadcasts a connectable wireless network named or associated with the identifying data 40 or information derivative thereof. In one instance, the wireless network can be named based on the MAC address, the serial number, or another aspect of the identifying data 40. In this sense, the controller module 60, aware of the wireless naming convention of an appliance in disconnected mode, can tailor the set of instructions associated with the identifying data 40 of the first appliance 28.

The second appliance 30, upon receiving the set of instructions, can in turn, follow or otherwise execute the set of instructions. In one non-limiting example, the instructions can command or control the second appliance 30 to disconnect from the wireless gateway 24 and connects directly to the wireless network of the communication module 38 operating in disconnected mode, as shown by a third communication 73. The connection can be a wireless pairing. As used herein, the term "wireless pairing" can include any method of wireless communication between a pair of wireless devices, or between the first appliance 28 and the second appliance 30. Wireless pairing can be, by way of non-limiting example, Bluetooth pairing, WIFI association, or WIFI authentication.

Once paired with, or in communication with the second appliance 30, the communication module 38 of the first appliance 28 is in connected mode, and can enable or allow for data transmissions between the first and second appliances 28, 30. In one non-limiting example, the third communication 73 between the second appliance 30 and the first appliance 28 can include at least a transition of authorization data 46 from the second appliance 30 directly to the first appliance 28 via the third communication 73.

Once the authorization data 46 is transferred from the second appliance 30 to the first appliance 28, the second appliance 30, following the set of instructions, can disconnect from the first appliance 28, and reconnects with the wireless gateway 24. The first appliance 28 can then, by way of the authorization data 46, establish authorized communication with the wireless gateway 24, as illustrated by way of non-limiting example as a fourth communication 74. In the exemplary example, the authorization data 46 is never transferred through the internet 26, nor is it stored on the controller module 60 or the additional controller modules 60.

A set of communications can be received by the controller module 60 from the first appliance 28 illustrated by the fifth communication 75. The set of communications received by the controller module 60 can verify or register the first appliance 28 to the user 62. For example, the set of communications received by the controller module 60 can register the first appliance 12 as a new entry associated with the user data 68 in the database 61.

In one non-limiting example, the remote system 16, in response to successfully registering the first appliance 28 at the database 61, generates a confirmation message, based on receiving the set of communications via the fifth communication 75. In another non-limiting example, the confirmation message can be generated by the controller module 60, and can include information related to the authorized communication between the first appliance 28 and the LAN 20, or the successful registering of the first appliance 28 at the database 61. The confirmation message can be communicated from the controller module 60 to the mobile device 32 by way of a sixth communication 76, wherein the confirmation message can be presented to the user 62, such as by way of the user interface 66.

Additional or alternative aspects of the disclosure can be included. For example, in one non-limiting example the controller module 60 of the remote system or the additional computer systems or servers 54 can determine, based on at least the identifying data 40 a set of range instructions. The range instructions can determine if at least a subset of the set of second appliances 30 or the second appliance 30 is within signal range of the first appliance 28. The communication of the set of range instructions from the controller module 60 are sent via the internet 26 to the set of second appliances 30 or the second appliance 30 via the wireless gateway 24. By way of non-limiting example, second communication 72 illustrates the communication of the set of range instructions from the controller module 60 to the set of second appliances 30 or the second appliance 30.

The range instructions are sent to each registered appliance in the set of second appliances 30. Registration of an appliance can be determined using the database 61. The range instructions instruct the registered appliance to "look for" or query available wireless networks to determine if it "sees" the first appliance's 28 wireless network. A set of range responses, can be communicated from the set of second appliances 30 or the second appliance 30 to the controller module 60 using the second communication 72, wherein the reply can include a response that "I see it" or "I don't see it." Based on the set of range responses, the controller module 60 can then select one of the set of second appliances 30 that "sees" the first appliance's 28 wireless network to initiate the pairing. Additionally, the selection of the one of the set of second appliances 30 can be determined based on signal strength. By way of non-limiting example, consider the second appliance 30 to be the selected one of the subset. Alternatively, any of the set of second appliances 30, after "seeing" the first appliance 28, can directly initiate pairing.

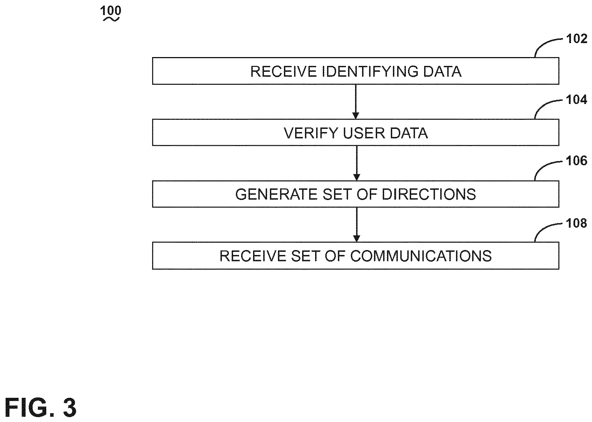

FIG. 3 is a flow chart illustrating a method 100 for authorizing the first appliance 28 adapted to perform a cycle of operation on an article with the LAN 20. The method 100 begins by receiving, at the controller module 60 remote from the first appliance 28, the identifying data 40 of the first appliance 28 and user data 68 via the first communication 70, at 102.

Next, the method 100 includes verifying, by the controller module 60, the user data 68 is associated with a second appliance 30 authorized to communicate with the LAN 20 by way of authorization data 46, at 104. At 106, the set of instructions for the second appliance 30 are established by the controller module 60. The set of instructions can include the identifying data 40 of the first appliance 28. The set of instructions can instruct the second appliance 30 to communicate directly with the first appliance 28 and to transmit the authorization data 46 from the second appliance 30 to the first appliance 28 via the third communication 73.

The method 100 can further include generating the confirmation message by the controller module 60 that the first appliance 28 is authorized to communicate with the LAN 20. The confirmation message can then be transmitted to the user 62 by way of the sixth communication 76 and the mobile device 32.

The sequence depicted is for illustrative purposes only and is not meant to limit the method 100 in any way as it is understood that the portions of the method 100 can proceed in a different logical order, additional or intervening portions can be included, or described portions of the method can be divided into multiple portions, or described portions of the method can be omitted without detracting from the described method. For example, in one non-limiting aspect of the disclosure, the method can include generating the confirmation message by the controller module 60 that the first appliance 28 is authorized to communicate with the LAN 20, and transmitting the confirmation message to the user 62. In another non-limiting aspect of the disclosure, in the method 100 the user 62 is associated with the user data 68.

In yet another non-limiting aspect, the method 100 can include the identifying data further generated by the user 62 by way of a mobile device 32. In yet another non-limiting aspect, the method 100 can include the identifying data generated by way of scanning the optical code at the first appliance 28 by the camera 64 associated with the mobile device 32. In yet another non-limiting aspect, the method 100 can further include generating the confirmation message by the controller module 60 that the first appliance 28 is authorized to communicate with the LAN 20, and transmitting the confirmation message to the user 62 by way of the mobile device 32.

In yet another non-limiting aspect, the method 100 can include verifying the user data at 104 that can further include determining the set of second appliances 30 associated with the user data 68. In yet another non-limiting aspect, the method 100 wherein generating the set of instructions further include generating the set of range instructions adapted to instruct the set of second appliances 30 to determine if at least a subset of second appliances 30 are within signal range of the first appliance 28, wherein the determining is based at least on the identifying data 40. In yet another non-limiting aspect, the method 100 further including upon determining that at least the subset of second appliances 30 are within signal range of the first appliance 28, selecting one of the subset of second appliances 30 and generating the set of instructions adapted to instruct the selected one of the subset of second appliances 30 to communicate directly with the first appliance 28 and to transmit the authorization data 46 from the second appliance 30 to the first appliance 28.

In yet another non-limiting aspect, the method 100 can include the identifying data 40 of the first appliance 28 that includes data related to at least one of wireless signal service set identifier (SSID) of the first appliance 28 or the media access control (MAC) address of the first appliance 28. In yet another non-limiting aspect, the method 100 wherein generating the set of instructions further includes generating the set of instructions adapted to instruct the second appliance 30 to wirelessly pair with the first appliance 28, to transmit the authorization data 46 from the second appliance 30 to the first appliance 28 by way of the wireless pairing, and to disconnect the second appliance 30 from the wireless pairing with the first appliance 28, and to reconnect the second appliance 30 with the LAN 20.

In yet another non-limiting aspect, the method 100 wherein the LAN 20 is the wireless network and the authorization data 46 includes at least the wireless network name of the wireless network.

The aspects disclosed herein provide an appliance with the information necessary to communication with a first network or LAN, wherein the connection happens without the user having to enter network names or passwords. The technical effect is that the above described aspects enable the communicative connection between a second appliance authorized to communicate with the first network, to communicate with a first appliance not authorized to communicate with the first network, and to provide the authorization from the second appliance to the first appliance such that the first appliance can then communicate with the first network.

One advantage of the method described herein is data security. Data security can be enhanced by minimizing points of failure or possible breach as the LAN or WLAN name or password never leaves the first network. If the LAN or WLAN name or password were to be communicated outside the first network or stored on an outside server, the points of failure or possible breach increase. External servers can have information compromised while communications can be corrupted or intercepted.

Another advantage that can be realized is the ease of connecting an appliance to a LAN or WLAN without having to enter the name or password of the LAN or WLAN. The method disclosed herein provides an easy and secure way to connect an appliance to a LAN or WLAN without having to remember or acutely enter the name or password of the LAN or WLAN. The method disclosed herein also provides a confirmation of the connection between the appliance and the LAN or WLAN to the user. The confirmation of connection takes the guess work out of trying to figure out if the connection was successful.

Yet another advantage is the automatic registration of the appliance when it is recognized by the remote system. The remote system can communicate with the appliance to provide the user with updates or information or products related to the registered appliance.

Further, a secure wireless environment is much more efficient and convenient than using traditional Ethernet cable to physically connect appliances to the home network or to connect them temporarily to transmit information. The aspects disclosed herein allow for quick connection to a secure network and increased flexibility in where the appliances can be placed within the home.

Many other possible aspects and configurations in addition to that shown in the above figures are contemplated by the present disclosure. Additionally, the design and placement of the various components of the system can be rearranged such that a number of different configurations could be realized.

To the extent not already described, the different features and structures of the various aspects can be used in combination with each other as desired. That one feature cannot be illustrated in all of the aspects is not meant to be construed that it cannot be, but is done for brevity of description. Thus, the various features of the different aspects can be mixed and matched as desired to form new aspects, whether or not the new aspects are expressly described. Combinations or permutations of features described herein are covered by this disclosure.

This written description uses examples to disclose aspects of the disclosure, including the best mode, and also to enable any person skilled in the art to practice aspects of the disclosure, including making and using any devices or systems and performing any incorporated methods. The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method (100) for authorizing a first appliance (28) adapted to perform a cycle of operation on an article to communicate with a Local Area Network (LAN, 20), wherein the method (100) comprises the steps of :
receiving (102), at a controller module (60) remote from the first appliance (28), identifying data (40) of the first appliance (28) and user data (68);
verifying (104), by the controller module (60) that the user data (68) is associated with a second appliance (30) authorized to communicate with the Local Area Network (LAN, 20) by way of authorization data (46);
generating a set of instructions (106) , by the controller module (60), adapted to instruct the second appliance (30) to communicate directly with the first appliance (28) and to transmit the authorization data (46) from the second appliance (30) to the first appliance (28), wherein the set of instructions include the identifying data (40) of the first appliance (28), and
communicating, by the controller module (60), said set of instructions (106) to the second appliance (30), thereby authorizing the first appliance (28) to communicate with the Local Area Network (LAN, 20) by way of the authorization data (46); and
receiving, at the controller module (60), a set of communications from the first appliance (28), wherein the set of communications arrives by way of authorized communications of the Local Area Network (LAN, 20).

2. The method (100) of claim 1, further comprising generating a confirmation message by the controller module (60) that the first appliance (28) is authorized to communicate with the Local Area Network (LAN, 20), and transmitting the confirmation message to a user (62).

3. The method (100) of claim 2 wherein the user (62) is associated with the user data (68).

4. The method (100) of claim 1 wherein the identifying data (40) is further generated by a user (62) by way of a mobile device (32).

5. The method (100) of claim 4 wherein the identifying data (40) is generated by way of scanning an optical code at the first appliance (28) by a camera (64) associated with the mobile device (32).

6. The method (100) of claim 4, further comprising generating a confirmation message by the controller module (60) that the first appliance (28) is authorized to communicate with the Local Area Network (LAN, 20), and transmitting the confirmation message to the user (62) by way of the mobile device (32).

7. The method (100) of claim 1 wherein verifying the user data (68) further comprises determining a set of second appliances (30) associated with the user data (68).

8. The method (100) of claim 7, wherein generating a set of instructions further comprises generating a set of range instructions adapted to instruct the set of second appliances (30) to determine if at least a subset of second appliances (30) are within signal range of the first appliance (28), wherein the determining is based at least on the identifying data (40).

9. The method (100) of claim 8, further comprising, upon determining that at least the subset of second appliances (30) are within signal range of the first appliance (28), selecting one of the subset of second appliances (30) and generating the set of instructions adapted to instruct the selected one of the subset of second appliances (30) to communicate directly with the first appliance (28) and to transmit the authorization data (46) from the second appliance (30) to the first appliance (28).

10. The method (100) of claim 1 wherein the identifying data (40) of the first appliance (28) includes data related to at least one of wireless signal service set identifier (SSID) of the first appliance (28) or a media access control (MAC) address of the first appliance (28).

11. The method (100) of claim 10 wherein generating the set of instructions further comprises generating a set of instructions adapted to instruct the second appliance (30) to wirelessly pair with the first appliance (28), to transmit the authorization data (46) from the second appliance (30) to the first appliance (28) by way of the wireless pairing, and to disconnect the second appliance (30) from the wireless pairing with the first appliance (28), and to reconnect the second appliance (30) with the Local Area Network (LAN, 20), wherein the Local Area Network (LAN, 20) is a wireless network and the authorization data (46) includes at least a wireless network name of the wireless network.

12. A communication system (10) comprising:
a first appliance (28) configured to perform a cycle of operation on an article and having a communication module (38);
a second appliance (30) in authorized communication with a Local Area Network (LAN, 20) within range of the first appliance (28) and the second appliance (30); and
a controller module (60) located remotely from the Local Area Network (LAN, 20), and in communication with the Local Area Network (LAN, 20) by way of the Internet (26),
wherein the controller module is (60) configured to perform the method steps of claim 1.

13. The communication system (10) of claim 12, further comprising a mobile device (32) configured to send the identifying data (40) of the first appliance (28) to the controller module (60).

14. The communication system (10) of claim 13 wherein the mobile device (32) is further configured to send user data (68) related to an owner (62) of the first appliance (28) and the second appliance (30) to the controller module (60).

15. The communication system (10) of claim 14, further comprising a wireless gateway (24), and wherein the Local Area Network (LAN, 20) is a wireless local area network (WLAN) and wherein the authorization data (46) includes at least a wireless network name of the WLAN.

## Patentansprüche

1. Verfahren (100) zum Autorisieren eines ersten Haushaltsgeräts (28), das angepasst ist, um einen Betriebszyklus an einem Gegenstand durchzuführen, um mit einem lokalen Netz (LAN, 20) zu kommunizieren, wobei das Verfahren (100) die folgenden Schritte umfasst:
Empfangen (102), an einem Steuerungsmodul (60), fern von dem ersten Haushaltsgerät (28), identifizierende Daten (40) des ersten Haushaltsgeräts (28) und Benutzerdaten (68);
Verifizieren (104), durch das Steuerungsmodul (60), dass die Benutzerdaten (68) mit einem zweiten Haushaltsgerät (30), das autorisiert ist, anhand von Autorisierungsdaten (46) mit dem lokalen Netz (LAN, 20) zu kommunizieren, assoziiert sind;
Generieren eines Befehlssatzes (106) durch das Steuerungsmodul (60), der angepasst ist, um das zweite Haushaltsgerät (30) anzuweisen, direkt mit dem ersten Haushaltsgerät (28) zu kommunizieren und die Autorisierungsdaten (46) von dem zweiten Haushaltsgerät (30) an das erste Haushaltsgerät (28) zu übertragen, wobei der Befehlssatz die identifizierenden Daten (40) des ersten Haushaltsgeräts (28) beinhaltet, und
Kommunizieren, durch das Steuerungsmodul (60), des Befehlssatzes (106) an das zweite Haushaltsgerät (30), wodurch das erste Haushaltsgerät (28) autorisiert wird, mit dem lokalen Netz (LAN, 20) anhand der Autorisierungsdaten (46) zu kommunizieren; und
Empfangen, an dem Steuerungsmodul (60), eines Kommunikationssatzes von dem ersten Haushaltsgerät (28), wobei der Kommunikationssatz anhand von autorisierten Kommunikationen des lokalen Netzes (LAN, 20) ankommt.

2. Verfahren (100) nach Anspruch 1, weiter umfassend das Generieren einer Bestätigungsnachricht durch das Steuerungsmodul (60), dass das erste Haushaltsgerät (28) autorisiert ist, mit dem lokalen Netz (LAN, 20) zu kommunizieren, und das Übertragen der Bestätigungsnachricht an einen Benutzer (62).

3. Verfahren (100) nach Anspruch 2, wobei der Benutzer (62) mit den Benutzerdaten (68) assoziiert ist.

4. Verfahren (100) nach Anspruch 1, wobei die identifizierenden Daten (40) weiter durch einen Benutzer (62) anhand einer mobilen Vorrichtung (32) generiert werden.

5. Verfahren (100) nach Anspruch 4, wobei die identifizierenden Daten (40) anhand von einem Scannen eines optischen Codes an dem ersten Haushaltsgerät (28) durch eine Kamera (64), die mit der mobilen Vorrichtung (32) assoziiert ist, generiert werden.

6. Verfahren (100) nach Anspruch 4, weiter umfassend das Generieren einer Bestätigungsnachricht durch das Steuerungsmodul (60), dass das erste Haushaltsgerät (28) autorisiert ist, mit dem lokalen Netz (LAN, 20) zu kommunizieren, und das Übertragen der Bestätigungsnachricht an den Benutzer (62) anhand der mobilen Vorrichtung (32).

7. Verfahren (100) nach Anspruch 1, wobei das Verifizieren der Benutzerdaten (68) weiter das Bestimmen eines Satzes von zweiten Haushaltsgeräten (30), der mit den Benutzerdaten (68) assoziiert ist, umfasst.

8. Verfahren (100) nach Anspruch 7, wobei das Generieren eines Befehlssatzes weiter das Generieren eines Satzes von Bereichsanweisungen, der angepasst ist, um den Satz von zweiten Haushaltsgeräten (30) anzuweisen zu bestimmen, ob sich mindestens ein Subsatz von zweiten Haushaltsgeräten (30) innerhalb des Signalbereichs des ersten Haushaltsgeräts (28) befindet, wobei das Bestimmen mindestens auf den identifizierenden Daten (40) basiert.

9. Verfahren (100) nach Anspruch 8, weiter umfassend, nach dem Bestimmen, dass sich mindestens ein Subsatz von zweiten Haushaltsgeräten (30) innerhalb des Signalbereichs des ersten Haushaltsgeräts (28) befindet, das Auswählen eines von den Subsätzen von zweiten Haushaltsgeräten (30) und das Generieren des Befehlssatzes, der angepasst ist, um den ausgewählten einen von den Subsätzen von zweiten Haushaltsgeräten (30) anzuweisen, direkt mit dem ersten Haushaltsgerät (28) zu kommunizieren und die Autorisierungsdaten (46) von dem zweiten Haushaltsgerät (30) an das erste Haushaltsgerät (28) zu übertragen.

10. Verfahren (100) nach Anspruch 1, wobei die identifizierenden Daten (40) des ersten Haushaltsgeräts (28) Daten bezüglich mindestens einem von einem drahtlosen Signal-Service Satz-Identifizierer (SSID) des ersten Haushaltsgeräts (28) oder einer Medienzugriffssteuerungs- (MAC) Adresse (des ersten Haushaltsgeräts (28) beinhalten.

11. Verfahren (100) nach Anspruch 10, wobei das Generieren des Befehlssatzes weiter das Generieren eines Befehlssatzes umfasst, der angepasst ist, um das zweite Haushaltsgerät (30) anzuweisen, sich drahtlos mit dem ersten Haushaltsgeräts (28) zu paaren, um die Autorisierungsdaten (46) von dem zweiten Haushaltsgerät (30) an das erste Haushaltsgerät (28) anhand des drahtlosen Paarens zu übertragen und das zweite Haushaltsgerät (30) von dem drahtlosen Paaren mit dem ersten Haushaltsgerät (28) zu trennen, und das zweite Haushaltsgerät (30) erneut mit dem lokalen Netz (LAN, 20) zu verbinden, wobei das lokale Netz (LAN, 20) ein drahtloses Netz ist und die Autorisierungsdaten (46) mindestens einen drahtlosen Netznamen des drahtlosen Netzes beinhalten.

12. Kommunikationssystem (10), umfassend:
ein erstes Haushaltsgerät (28), das konfiguriert ist, um einen Betriebszyklus an einem Gegenstand durchzuführen und das ein Kommunikationsmodul (38) aufweist;
ein zweites Haushaltsgerät (30), das mit einem lokalen Netz (LAN, 20) innerhalb des Bereichs des ersten Haushaltsgeräts (28) und des zweiten Haushaltsgeräts (30) in autorisierter Kommunikation steht; und
ein Steuerungsmodul (60), das sich fern von dem lokalen Netz (LAN, 20) befindet und in Kommunikation mit dem lokalen Netz (LAN, 20) anhand des Internets (26) steht,
wobei das Steuerungsmodul (60) konfiguriert ist, um die Verfahrensschritte nach Anspruch 1 durchzuführen.

13. Kommunikationssystem (10) nach Anspruch 12, weiter umfassend eine mobile Vorrichtung (32), die konfiguriert ist, um die identifizierenden Daten (40) des ersten Haushaltsgeräts (28) an das Steuerungsmodul (60) zu senden.

14. Kommunikationssystem (10) nach Anspruch 13, wobei die mobile Vorrichtung (32) weiter konfiguriert ist, um Benutzerdaten (68) bezüglich eines Besitzers (62) des ersten Haushaltsgeräts (28) und des zweiten Haushaltsgeräts (30) an das Steuerungsmodul (60) zu senden.

15. Kommunikationssystem (10) nach Anspruch 14, weiter umfassend eine drahtlose Schnittstelle (24), und wobei das lokale Netz (LAN, 20) ein drahtloses lokales Netz (WLAN) ist und wobei die Autorisierungsdaten (46) mindestens einen drahtlosen Netznamen des WLANs beinhalten.

## Revendications

1. Procédé (100) permettant d'autoriser un premier appareil (28) adapté pour réaliser un cycle de fonctionnement sur un article à communiquer avec un réseau local (LAN, 20), dans lequel le procédé (100) comprend les étapes de :
réception (102), au niveau d'un module de dispositif de commande (60) distant du premier appareil (28), de données d'identification (40) du premier appareil (28) et de données utilisateur (68) ;
vérification (104), par le module de dispositif de commande (60), que les données utilisateur (68) sont associées à un second appareil (30) autorisé à communiquer avec le réseau local (LAN, 20) au moyen de données d'autorisation (46) ;
génération d'un ensemble d'instructions (106), par le module de dispositif de commande (60), adapté pour donner l'instruction au second appareil (30) de communiquer directement avec le premier appareil (28) et de transmettre les données d'autorisation (46) du second appareil (30) au premier appareil (28), dans lequel l'ensemble d'instructions inclut les données d'identification (40) du premier appareil (28), et
communication, par le module de dispositif de commande (60), dudit ensemble d'instructions (106) au second appareil (30), autorisant ainsi le premier appareil (28) à communiquer avec le réseau local (LAN, 20) au moyen des données d'autorisation (46) ; et
réception, au niveau du module de dispositif de commande (60), d'un ensemble de communications à partir du premier appareil (28), dans lequel l'ensemble de communications arrive au moyen de communications autorisées du réseau local (LAN, 20).

2. Procédé (100) selon la revendication 1, comprenant en outre une génération d'un message de confirmation par le module de dispositif de commande (60) que le premier appareil (28) est autorisé à communiquer avec le réseau local (LAN, 20), et une transmission du message de confirmation à un utilisateur (62).

3. Procédé (100) selon la revendication 2 dans lequel l'utilisateur (62) est associé aux données utilisateur (68).

4. Procédé (100) selon la revendication 1 dans lequel les données d'identification (40) sont en outre générées par un utilisateur (62) au moyen d'un dispositif mobile (32).

5. Procédé (100) selon la revendication 4 dans lequel les données d'identification (40) sont générées au moyen d'un balayage d'un code optique au niveau du premier appareil (28) par une caméra (64) associée au dispositif mobile (32).

6. Procédé (100) selon la revendication 4, comprenant en outre une génération d'un message de confirmation par le module de dispositif de commande (60) que le premier appareil (28) est autorisé à communiquer avec le réseau local (LAN, 20), et une transmission du message de confirmation à l'utilisateur (62) au moyen du dispositif mobile (32).

7. Procédé (100) selon la revendication 1 dans lequel la vérification des données utilisateur (68) comprend en outre une détermination d'un ensemble de seconds appareils (30) associé aux données utilisateur (68).

8. Procédé (100) selon la revendication 7, dans lequel la génération d'un ensemble d'instructions comprend en outre une génération d'un ensemble d'instructions de portée adapté pour donner l'instruction à l'ensemble de seconds appareils (30) de déterminer si au moins un sous-ensemble de seconds appareils (30) est dans une portée de signal du premier appareil (28), dans lequel la détermination est basée au moins sur les données d'identification (40).

9. Procédé (100) selon la revendication 8, comprenant en outre, lors de la détermination qu'au moins le sous-ensemble de seconds appareils (30) est dans une portée de signal du premier appareil (28), une sélection de l'un du sous-ensemble de seconds appareils (30) et une génération de l'ensemble d'instructions adapté pour donner l'instruction au sélectionné du sous-ensemble de seconds appareils (30) de communiquer directement avec le premier appareil (28) et de transmettre les données d'autorisation (46) du second appareil (30) au premier appareil (28).

10. Procédé (100) selon la revendication 1 dans lequel les données d'identification (40) du premier appareil (28) incluent des données liées à au moins un d'un identifiant d'ensemble de services (SSID) de signal sans fil du premier appareil (28) ou d'une adresse de commande d'accès au support (MAC) du premier appareil (28).

11. Procédé (100) selon la revendication 10 dans lequel la génération de l'ensemble d'instructions comprend en outre une génération d'un ensemble d'instructions adapté pour donner l'instruction au second appareil (30) de s'apparier sans fil au premier appareil (28), pour transmettre les données d'autorisation (46) du second appareil (30) au premier appareil (28) au moyen de l'appariement sans fil, et pour déconnecter le second appareil (30) de l'appariement sans fil au premier appareil (28), et pour reconnecter le second appareil (30) au réseau local (LAN, 20), dans lequel le réseau local (LAN, 20) est un réseau sans fil et les données d'autorisation (46) incluent au moins un nom de réseau sans fil du réseau sans fil.

12. Système de communication (10) comprenant :
un premier appareil (28) configuré pour réaliser un cycle de fonctionnement sur un article et présentant un module de communication (38) ;
un second appareil (30) en communication autorisée avec un réseau local (LAN, 20) dans une portée du premier appareil (28) et du second appareil (30) ; et
un module de dispositif de commande (60) situé à distance du réseau local (LAN, 20), et en communication avec le réseau local (LAN, 20) au moyen d'Internet (26),
dans lequel le module de dispositif de commande est (60) configuré pour réaliser les étapes de procédé selon la revendication 1.

13. Système de communication (10) selon la revendication 12, comprenant en outre un dispositif mobile (32) configuré pour envoyer les données d'identification (40) du premier appareil (28) au module de dispositif de commande (60).

14. Système de communication (10) selon la revendication 13 dans lequel le dispositif mobile (32) est en outre configuré pour envoyer des données utilisateur (68) liées à un propriétaire (62) du premier appareil (28) et du second appareil (30) au module de dispositif de commande (60).

15. Système de communication (10) selon la revendication 14, comprenant en outre une passerelle sans fil (24), et dans lequel le réseau local (LAN, 20) est un réseau local sans fil (WLAN) et dans lequel les données d'autorisation (46) incluent au moins un nom de réseau sans fil du WLAN.
